# EUROPEAN PATENT APPLICATION

(11) **EP 2 343 712 A2**
(43) Date of publication of application: **13.07.2011**
(21) Application number: 09822218.5
(22) Date of filing: 22.10.2009
(51) Int. Cl.: G21D 3/04

(54) **PROTECTION SYSTEM AND PROTECTION METHOD OF POWER PLANT USING FPGA**

(30) Priority: 22.10.2008 KR 20080103725
(71) Applicant: Kepco Engineering & Construction Company, Giheung-gu Yongin-City, Kyungki-do 449-713 (KR)
(72) Inventor: KIM, Hang Bae, Daejeon-city 305-768 (KR); KIM, Jae Hack, Daejeon-city 305-340 (KR); HAN, Suk Gyu, Daejeon-city 305-770 (KR); JEONG, See Chae, Gyeonggi-Do 437-060 (KR); LEE, Yoon Hee, Daejeon-city 302-753 (KR); CHOI, Woong Seock, Daejeon-city 305-509 (KR)
(74) Representative: MacDougall, Alan John Shaw
(86) International application number: PCT/KR2009/006117
(87) International publication number: WO 2010/047542

(57) **Abstract**

Provided is a plant protection system, which determines initiation of protective actions for the plant, and more particularly to the plant protection system including four channels which controls systems that shut down the plant or mitigate consequences of abnormal conditions of the plant by detecting non-permissible plant conditions with the result of bistable logic comparing process parameters with their setpoints assigned to each channel. Accordingly, common mode failure and cyber security vulnerability caused by software are removed since the system is composed of FPGA and other types of hardware without central processing units and software in determining the initiation of plant protective actions.

## Description

### CROSS-REFERENCE TO RELATED PATENT APPLICATION

This application claims the benefit of Korean Patent Application No. 10-2008-0103725, filed on October 22, 2008, in the Korean Intellectual Property Office, the disclosure of which is incorporated herein in its entirety by reference.

### BACKGROUND OF THE INVENTION

### 1. Field of the Invention

The present invention relates to a plant protection system which determines initiation of protective actions for power plants, and more particularly to the four channel plant protection system which detects non-permissible plant conditions based on the result of bistable logic comparing process parameters with their setpoints assigned to each channel and controls systems that shutdown the plant or mitigate the consequences of abnormal conditions.

### 2. Description of the Related Art

A plant protection system monitors plant conditions with field sensors and provides initiation signals to reactor trip systems and engineered safety features actuation systems upon the detection of abnormal states.

In other words, the plant protection system automatically generates the initiation signal to maintain the operation of the plant when the process input parameter from a sensor is compared to a setpoint and it exceeds the setpoint. An initiation signal for reactor trip opens reactor trip switch gears and interrupts the power provided to control rod drive mechanisms, and thus the control rods fall into the reactor core by gravity.

A conventional plant protection system is designed based on the analog technology. Nowadays, maintenance and repair for analog-based plant protection systems may be difficult as analog parts become obsolete or difficult to secure.

Accordingly, as an alternative to the analog technology, the digitalization of the plant protection system is required. Recently, digital plant protection systems which include programmable logic controllers (PLCs) or computers have been introduced.

However, a PLC- or computer-based plant protection system shall use an operating system and software, and so it may result in common mode failure when a problem occurs in the operating system or software, and cyber security vulnerability cannot be resolved technically.

### SUMMARY OF THE INVENTION

The present invention provides a four-channel plant protection system, wherein the system is able to inherently exclude the common mode failure and cyber security vulnerability which may be generated in a programmable logic controller (PLC) or computer-based plant protection system, by implementing various protection logics into field programmable gate array(FPGA) without any central processing unit(CPU), operating system(OS), or other types of software.

According to an aspect of the present invention, there is provided a FPGA-based plant protection system that detects non-permissible plant conditions with the result of bistable logic comparing process parameters with their setpoints assigned to each channel and controls systems that shutdown the plant or mitigate the consequences of abnormal conditions. The FPGA-based plant protection system is including four channels, wherein each of the four channels includes: a bistable logic unit, which performs bistable logic comparing the process parameters with the their setpoints, generates bistable logic data containing trip states of the process parameters, and transmits the bistable logic data to the four channels; a coincidence logic unit, which collects the bistable logic data from the four channels, performs local coincidence logic of each process parameter with the bistable logic data, and generates coincidence logic data related to plant protective actions; and an initiation circuit unit, which performs initiation logic of the plant protective actions with the coincidence logic data and generates initiation signals for the plant protective actions.

The bistable logic unit may include: a bistable logic card, which receives the process parameters from sensors, performs bistable logic in FPGA and generates the bistable logic data; a bistable logic interface card, which transmits the bistable logic data to the each coincidence logic unit of the four channels; and a monitoring interface card, which monitors the integrity of the bistable logic card and the bistable logic interface card, and transmits monitoring results to a maintenance and test panel.

The coincidence logic unit may include: a coincidence logic interface card, which collects the bistable logic data from the four channels; a coincidence logic card, which performs the local coincidence logic in FPGA with the bistable logic data and generates the coincidence logic data; and a monitoring interface card, which monitors the integrity of the coincidence logic card and the coincidence logic interface card, and transmits monitoring results to the maintenance and test panel.

According to another aspect of the present invention, there is provided a plant protection method using FPGA, wherein the method is performed in a plant protection system which includes four channels, detects non-permissible plant conditions with the result of comparing process parameters with their setpoints and controls a system that shuts down a plant or mitigates the consequences of abnormal conditions. The method is performed identically in each channel and includes the following steps: (a) receiving the process parameters from sensors; (b) performing bistable logic comparing the process parameters with their setpoints, and generating bistable logic data containing trip status of each process parameter; (c) transmitting the bistable logic data to the same channel and the other three channels; (d) collecting the bistable logic data from the same channel and the other three channels, and performing local coincidence logic of each process parameter with the bistable logic data, and generating coincidence logic data related to plant protective actions; and (e) performing initiation logic of the plant protective actions with the coincidence logic data and generating initiation signals for the plant protective actions.

### BRIEF DESCRIPTION OF THE DRAWINGS

The above and other features and advantages of the present invention will become more apparent by describing in detail exemplary embodiments thereof with reference to the attached drawings in which:
FIG. 1 shows a block diagram illustrating a single channel, according to an embodiment of the present invention;
FIG. 2 is a block diagram illustrating four channels of the plant protection system, according to an embodiment of the present invention;
FIG. 3 is a detailed block diagram illustrating one channel of FIG. 2, according to an embodiment of the present invention;
FIG. 4 is a diagram illustrating the implementation of one channel of the plant protection system, according to an embodiment of the present invention; and
FIG. 5 is a flowchart illustrating a plant protection method, according to an embodiment of the present invention.

### DETAILED DESCRIPTION OF THE INVENTION

Hereinafter, the present invention will be described more specifically with reference to the accompanying drawings, in which exemplary embodiments of the invention are shown. In the drawings, like reference numerals denote like elements.

The present invention is about a plant protection system, whereby a common mode failure in software and cyber security vulnerability are resolved using only field programmable gate array (FPGA) and other hardware devices, without using any central processing unit (CPU), operating system(OS), or software, to determine the initiation of protective actions for the plant.

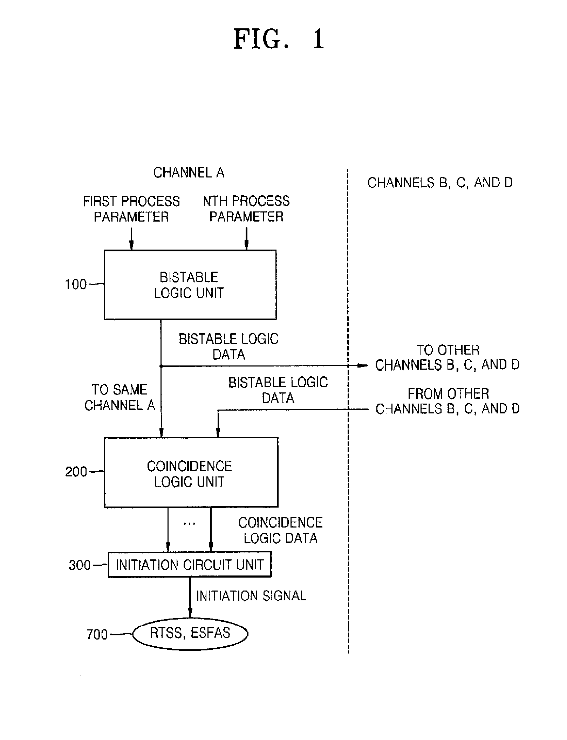

FIG. 1 shows a block diagram illustrating a single channel, according to an embodiment of the present invention.

The system according to the current embodiment includes four channels, i.e., channels A, B, C, and D. Each channel includes a bistable logic unit 100, a coincidence logic unit 200, and an initiation circuit unit 300. FIG. 1 shows channel A as a representative, and the other three channels (channel B, C, and D) have the same structures and functions as channel A.

The bistable logic unit 100, the coincidence logic unit 200, and the initiation circuit unit 300 are implemented using hardware such as FPGA, analog to digital (AD) converters, electrical wiring, relays and so on, instead of CPUs, operating systems, and dedicated software.

The bistable logic unit 100 performs a bistable logic where process parameters are compared with their setpoints and generates bistable logic data. The bistable logic data indicates whether each process parameter is in a trip state or an untrip state.

The process parameter is an independent analog signal from a sensor (TR) and is separately assigned for each channel. Each channel receives a suitable number of process parameters dependent on the type of the power plant, for example, from a first process parameter to an nth process parameter. Accordingly, if the number of the process parameters is 20, i.e. from the first process parameter to the 20^{th} process parameter, the bistable logic data indicates whether each of the the process parameter from the first parameter through the 20^{th} process parameter is in a trip state.

The bistable logic unit 100 can equally transmit the bistable logic data to the four channels (the same channel and the other three channels). In FIG. 1, channel A is illustrated, and the bistable logic unit 100 transmits the bistable logic data to the same channel (channel A) and simultaneously transmits the bistable logic data to other three channels (channel B, C, and D). Bistable logic units in the other channels perform the same function as the bistable logic unit 100 of channel A.

The coincidence logic unit 200 collects the bistable logic data from each of the four channels (channel A, B, C, and D), performs a local coincidence logic on each process parameter with the bistable logic data, and generates coincidence logic data related to protective actions for the plant. In other words, the coincidence logic unit 200 receives the bistable logic data from the bistable logic unit 100 of the same channel (channel A) and the bistable logic data from the other three channels (channel B, C, and D), and then generates the coincidence logic data by performing a 2-out-of-4 local coincidence logic of each process parameter with the bistable logic data.

The 2-out-of-4 local coincidence logic determines a tripped parameter, wherein two or more channels (at least 2 channels from among 4 channels) are in trip states with the bistable logic data from the four channels, and determines a trip status of each protective actions based on the process parameters, wherein two or more channels are in trip states.

The coincidence logic data is related to the protective actions for the plant, and contains trip states of 8 protective actions for the plant, such as reactor trip, main steam isolation, containment isolation, main feedwater actuation, safety injection, auxiliary feedwater actuation, containment spray, and recirculation. The assignment and combination of the process parameters, which lead to a trip state of the coincidence logic data, may be determined based on the result of safety analysis of each power plant.

The initiation circuit unit 300 performs initiation logic for every protective action with the local coincidence logic data and generates initiation signals for plant protective actions according to the result of the initiation logic.

The initiation signal from the initiation circuit unit 300 is transmitted to a reactor trip switchgear system (RTSS) and an engineered safety features actuation system (ESFAS) 700, thereby initiating the plant protective actions.

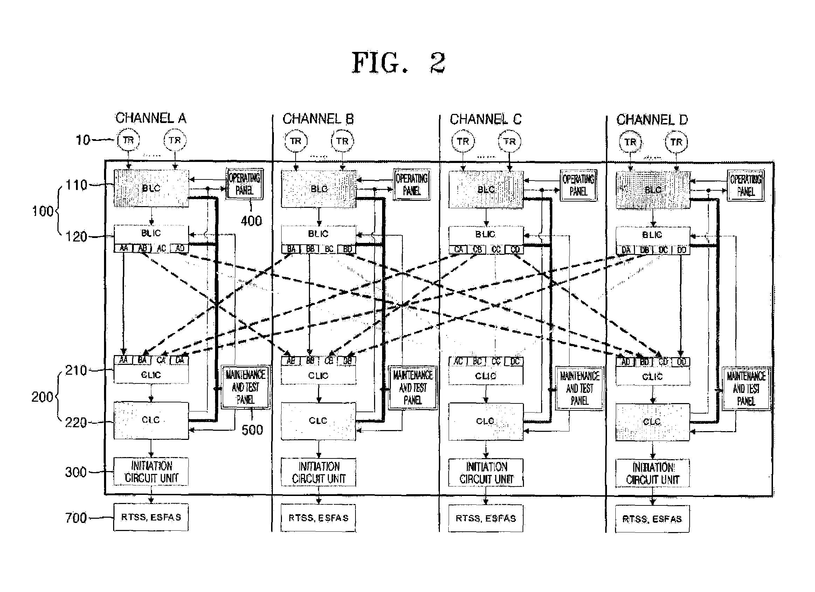

FIG. 2 is a block diagram illustrating four channels of the plant protection system, according to an embodiment of the present invention.

Referring to FIG. 2, the system basically includes four channels (channel A, B, C, and D). Each channel includes the bistable logic unit 100, the coincidence logic unit 200, and the initiation circuit unit 300, and may include an operation panel 400 and a maintenance and test panel 500 additionally. The configuration elements in each channel perform the same functions, and thus channel A is described as a representative.

The bistable logic unit 100 includes a bistable logic card (BLC) 110 and a bistable logic interface card (BLIC) 120, and may include a monitoring interface card (MIC) (not shown) additionally.

The bistable logic card 110 receives the analog process parameter signals from field sensors (TR) 10, compares each process parameters with their setpoints, and generates bistable logic data containing trip status of each process parameter. The bistable logic data is digital information that is transmitted to the bistable logic interface card 120. Meanwhile, the bistable logic card 110 may receive digital process parameter signals directly.

The bistable logic interface card 120 transmits identical bistable logic data to each of the coincidence logic interface cards 210 in the same channel (channel A) and the other three channels (channel B, C, and D).

The monitoring interface card (not shown) in the bistable logic unit 100 generates monitoring data based on all input/output values of the bistable logic unit 100 and the operating status of the bistable logic cards 110 and the bistable logic interface cards 120, and displays the monitoring data on a screen of the maintenance and test panel 500 or the operating panel 400.

The coincidence logic unit 200 includes a coincidence logic interface card (CLIC) 210 and a coincidence logic card (CLC) 220, and may include a monitoring interface card (not shown) additinally.

The coincidence logic interface card 210 receives the bistable logic data from each of the bistable logic interface cards 120 in the same channel (channel A) and the other three channels (channel B, C, and D), and transmits the bistable logic data to the coincidence logic card 220.

The coincidence logic card 220 collects bistable logic data from the four channels, and performs independent 2-out-of-4 local coincidence logic of each process parameter. In other words, the coincidence logic card 220 determines process parameters, wherein two or more channels are in trip state, and generates coincidence logic data related to plant protective actions according to the combination of these process parameters. The generated coincidence logic data are transmitted to the initiation circuit unit 300 of the same channel.

The monitoring interface card (not shown) in the coincidence logic unit 200 obtains all input/output values of the coincidence logic unit 200 and the operating status of the coincidence logic interface cards 210 and the coincidence logic cards 220, and displays the monitoring data on the screen of the maintenance and test panel 500 or the operating panel 400.

The initiation circuit unit 300 performs initaiation logic for every plant protective action with the local coincidence logic data, generates initiation signals for the plant protective actions, and then transmits the initiation signals to the RTSS and ESFAS 700.

The operating panel 400 displays the operating state of the system, i.e., trip state and channel bypass state, and enables the operator to reset a variable setpoint and perform operating bypass function according to the contact signal input by the operator.

The maintenance and test panel 500 displays the operating state of the system, and is used to perform maintenance according to the contact signal input by the operator.

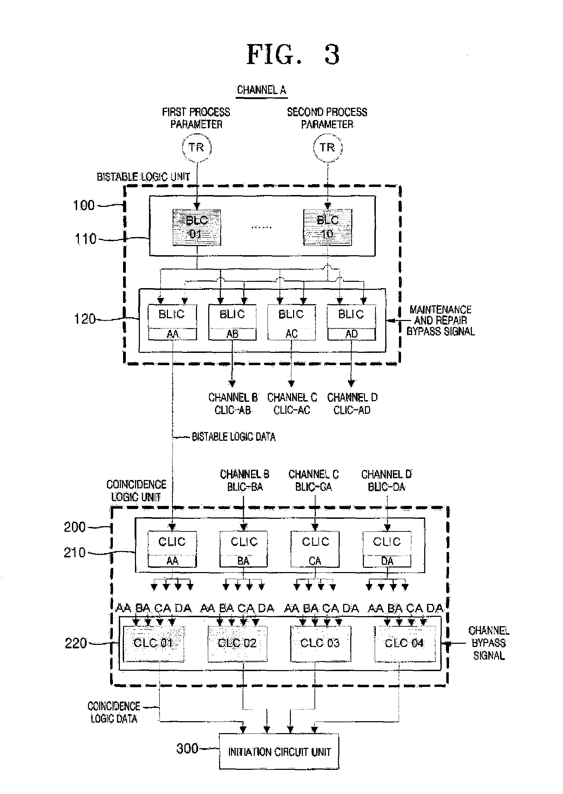

FIG. 3 is a detailed block diagram illustrating one channel of FIG. 2, according to an embodiment of the present invention. In FIG. 3, a configuration and signal flow of channel A is described as a representative, and the other three channels (channel B, C, and D) have the same configuration and signal flow as channel A.

Referring to FIG. 3, the bistable logic unit 100 of channel A includes ten bistable logic cards 110 and four bistable logic interface cards 120, and the number of process parameters assigned to each channel is 20.

The number of the process parameters assigned to each channel, the bistable logic units 100, the bistable logic cards 110, the bistable logic interface cards 120, the coincidence logic units 200, the coincidence logic interface cards 210, and the coincidence logic cards 220 may be suitably adjusted according to the scale and process of a power plant, and the number of channels.

Each bistable logic card 110 receives two process parameters in the analog signals from field sensors, and generates bistable logic data for the two process parameters by performing bistable logic that compares the process values with their setpoints. The bistable logic data from the bistable logic card 110 is equally transmitted to the four bistable logic interface cards 120 via signal lines of the back plane. Accordingly, ten bistable logic cards 110 (BLC01 through BLC10) may perform bistable logic on a total of twenty process parameters (a first process parameter through an nth process parameter). The bistable logic data on the twenty process parameters are equally transmitted to the four bistable logic interface cards 120.

The bistable logic data from the bistable logic unit 100 of a channel shall be transmitted to the coincidence logic unit 200 in the same channel and the other channels. Accordingly, the bistable logic unit 100 of each channel includes four bistable logic interface cards 120, and the coincidence logic unit 200 of each channel includes four coincidence logic interface cards 210. Each of the bistable logic interface cards 120 and coincidence logic interface cards 210 interfaces with one pre-assigned channel, and electrically isolates its channel from the other channels, when interfaced with another channel.

The bistable logic interface card 120 transmits the bistable logic data to the coincidence logic interface cards 210 in the 4 channels. In other words, each bistable logic interface card 120 receives the bistable logic data from the bistable logic card 110, and transmits the received bistable logic data to a coincidence logic interface card 210 in the pre-assigned channel among the four channels.

Referring to FIG. 3, a bistable logic interface card BLIC-AA transmits the bistable logic data to a coincidence logic interface card CLIC-AA in the same channel (channel A), and the other three bistable logic interface cards BLIC-AB, BLIC-AC, and BLIC-AD transmits the bistable logic data to coincidence logic interface cards CLIC-AB, CLIC-AC, and CLIC-AD in the other channels (channel B, C, and D).

In a maintenance bypass, a bistable logic trip of a process parameter is bypassed for a functional test or maintenance. For the maintenance bypass, each bistable logic interface card 120 receives a maintenance bypass signal of a process parameter via the maintenance and test panel 500.

Each bistable logic interface card 120 may include a maintenance bypass logic, which maintains the trip state of a process parameter in an untrip state when the maintenance bypass signal for the process parameter is received. The bistable logic interface card transmits the maintenance bypass condition of a process parameter to a monitoring interface card, that will be described later, via the signal line of the back plane in order to display its bypass condition on the maintenance and test panel 500. The maintenance bypass logic is implemented in the bistable logic interface card 120 by using the FPGA.

The coincidence logic unit 200 in channel A includes four coincidence logic interface cards 210 and four coincidence logic cards 220.

Each coincidence logic interface card 210 receives the bistable logic data from the bistable logic unit in a pre-assigned channel among the four channels, and equally transmits the received bistable logic data to the four coincidence logic cards 220. Referring to FIG. 3, a coincidence logic interface card CLIC-AA receives bistable logic data from a bistable logic interface card BLIC-AA in the same channel (channel A), and each of the three other coincidence logic interface cards CLIC-BA, CLIC-CA, and CLIC-DA receives the bistable logic data from the bistable logic interface cards BLIC-BA, BLIC-CA, and BLIC-DA in the other channels (channel B, C, and D).

Each coincidence logic card 220 collects bistable logic data from the four coincidence logic interface cards 210, and performs 2-out-of-4 local coincidence logic with the collected bistable logic data.

For example, a coincidence logic card CLC-01 receives the bistable logic data of the same channel (channel A) from a coincidence logic interface card CLIC-AA and simultaneously receives the bistable logic data of other channels (channel B, C, and D) from other coincidence logic interface cards CLIC-BA, CLIC-CA, and CLIC-DA, ultimately receiving the bistable logic data from all channels. Meanwhile, identical to the first coincidence logic card CLC-01, the other coincidence logic cards CLC-02 through CLC-04 receive the bistable logic data of the same channel (channel A) from the coincidence logic interface card CLIC-AA and simultaneously receive the bistable logic data of the other three channels (channel B, C, and D) from the coincidence logic interface cards CLIC-BA, CLIC-CA, and CLIC-DA. As such, each coincidence logic card 220 collects and processes the bistable logic data from all four channels, and the bistable logic data collected by the coincidence logic card 220 is eighty signals in regard to twenty process parameters.

Each coincidence logic card 220 generates the coincidence logic data by performing 2-out-of-4 local coincidence logic on the bistable logic data, and transmits the coincidence logic data to the initiation circuit unit 300. The coincidence logic data is determinant of trip state of each plant protective action, such as reactor trip, main steam isolation, containment isolation, safety injection, containment spray, main feedwater actuation, auxiliary feedwater actuation and recirculation.

During a channel bypass, all bistable logic data from a channel is bypassed for a functional test or maintenance. In order to do this, each coincidence logic interface card 220 receives a channel bypass signal from the maintenance and test panel 500.

Each coincidence logic card 220 includes channel bypass logic, which maintains all trip states of bistable logic data from a channel in untrip states when the channel bypass signal is received. The channel bypass logic is implemented in the coincidence logic card 220 by using the FPGA. Each channel bypass signal to the coincidence logic card 220 interrupts actual bistable logic data from a channel while enabling the bistable logic interface card 120 and the coincidence logic interface card 210 to be replaced during operation.

The bistable logic unit 100 and the coincidence logic unit 200 may include the monitoring interface card (not shown) additionally. Each channel may include the operating panel (not shown) and the maintenance and test panel (not shown) additionally. Since the monitoring interface card, the operating panel, and the maintenance and test panel are described above, herein is omitted the details thereof.

The initiation circuit unit 300 receives the coincidence logic data from each of the four coincidence logic cards 220, and generates the initiation signal by performing a selective 2-out-of-4 coincidence logic with the coincidence logic data.

The initiation circuit unit 300 performs the initiation logic by hard-wiring and relays, and thus the initiation circuit unit 300 hardly fails during the operation of the power plant.

The initiation signals are transmitted to RTSS and ESFAS. The initiation signals initiate 8 plant protective actions, such as reactor trip, main steam isolation, containment isolation, safety injection, containment spray, main feedwater actuation, auxiliary feedwater actuation and recirculation. The operation of the RTSS and ESFAS is controlled by the initiation signal.

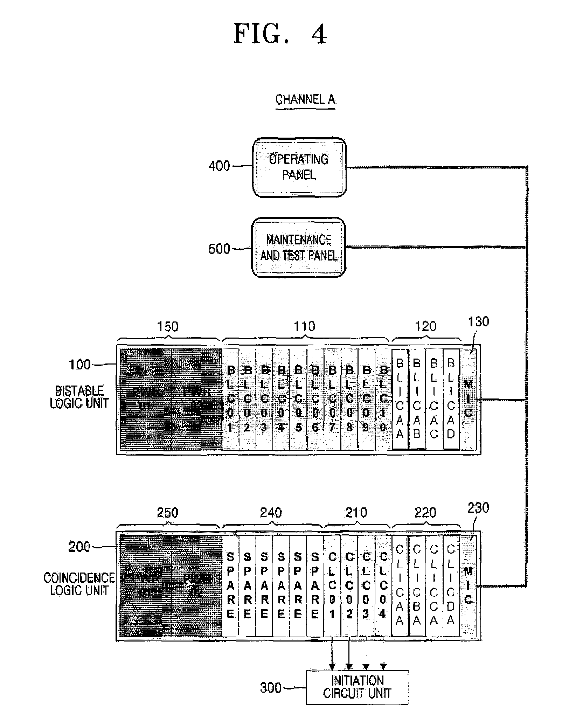

FIG. 4 is a diagram illustrating the implementation of one channel of the plant protection system, according to an embodiment of the present invention. In other words, FIG. 4 illustrates an actual manufacturing example of a channel (channel A) in the system, whereby common mode failures and software cyber security vulnerability are removed by only using FPGAs and other types of hardware without CPUs and software. The other three channels are manufactured in the same manner.

The bistable logic unit 100 and the coincidence logic unit 200 may be manufactured in 19-inch standard racks. The standard rack includes card slots, wherein various cards 110, 120, 130, 210, 220, 230, and 240 are detachable. Communication between cards and between channels is performed through signal lines on the back plane of the standard rack.

The bistable logic unit 100 includes ten bistable logic cards 110, four bistable logic interface cards 120, a monitoring interface card 130, and a power supply unit 150.

The bistable logic card 110 receives contact signals, such as operating bypass approval, operating bypass command, or setpoint reset, from the operating panel 400, and transmits contact signals, such as trips, pre-trips, or operating bypasses (on, off, or approval), to the operating panel 400. Also, the bistable logic card 110 receives process parameters as analog signals from field sensors, and equally transmits the bistable logic data to the four bistable logic interface cards 120 via signal lines of a back plane. Also, data, such as trips, pre-trips, operating bypasses (on, off, or approval), process parameters, or setpoints, are transmitted to the monitoring interface card 130 via the signal line and displayed on the maintenance and test panel 500.

The bistable logic card 110 is implemented by using the FPGA. All process parameters and contact signals input to the bistable logic card 110 are digitalized and used as inputs to the FPGA. The FPGA contains setpoints and pre-setpoints. Some process parameters need separately calculated setpoints. The FPGA determines a trip state by comparing the process parameter with its setpoint, and determines a pre-trip, which is a phase before a trip state, by using the pre-setpoint.

Meanwhile, operating bypasses are provided to disable trip functions of some process parameters during reactor start-up or shutdown. The FPGA reflects operating bypass states before determining pre-trip states and trip-states.

The bistable logic interface card 120 receives bistable logic data from each bistable logic card 110 and maintenance bypass signals of some process parameters from the maintenance and test panel 500, transmits the electrically isolated bistable logic data to the coincidence logic interface cards 210 in the same channel and the other channels, and transmits a maintenance bypass state of each process parameter to a monitoring interface card 230 via the signal lines of the back plane.

The bistable logic interface card 120 is implemented by using the FPGA. All bistable logic data and maintenance bypass signals input to the bistable logic interface card 120 are used as inputs to the FPGA.

Maintenance bypasses are provided to bypass trip states of some process parameters in the bistable logic data for purposes of functional testing or maintenance. When the FPGA receives maintenance bypass signals for some process parameters, the bistable logic data of that process parameters are maintained in an untrip state. Maintenance bypass signals to the bistable logic interface card 120 enables the bistable logic card 110 to be tested for a trip function or exchanged during operation, without an actual bistable logic trip.

The coincidence logic unit 200 may include four coincidence logic interface cards 210, four coincidence logic cards 220, the monitoring interface card 230, and the power supply unit 150.

The coincidence logic interface card 210 electrically isolates the bistable logic data from the bistable logic interface card 120, and transmits the bistable logic data to the four coincidence logic cards 220 via the signal lines. Since the coincidence logic interface card 210 only performs electrical isolation and data distribution, the FPGA with protection logic is not installed.

The coincidence logic card 220 receives the bistable logic data from all the channels through the four coincidence logic interface cards 210, performs local coincidence logic with the bistable logic data, and transmits the coincidence logic data to the initiation circuit unit 300.

The coincidence logic card 220 is implemented by using the FPGA. All bistable logic data and the channel bypass signals to the coincidence logic card 220 are used as inputs to the FPGA. The FPGA implemented in the coincidence logic card 220 generates the coincidence logic data by performing independent 2-out-of-4 local coincidence logic for each process parameter, and performs corresponding channel protection logic when the channel bypass signal is received. The channel bypass signal input to the coincidence logic card 220 enables the bistable logic interface card 120 and the coincidence logic interface card 210 to be replaced during operation while intercepting actual bistable logic data of a corresponding channel.

The initiation circuit unit 300 performs a selective 2-out-of-4 coincidence logic with the coincidence logic data from the four coincidence logic cards 220. The selective 2-out-of-4 coincidence logic prevents inadvertent channel actuation due to a failure in one of four coincidence logic cards 220. Since the initiation circuit unit 300 is composed of hard-wiring and relays, the initiation circuit unit 300 hardly breaks down during operation.

The monitoring interface cards 130 and 230 are serial communication cards that obtain all input/output data, various signals, and card failure status of the bistable logic unit 100 and the coincidence logic unit 200 through the signal lines of the back plane, and dispaly the data on the operating panel 400 or the maintenance and test panel 500. The monitoring interface cards 130 and 230 do not perform functions related to the plant protective actions, but perform as isolation devices between other cards of the bistable logic unit 100 and the coincidence logic unit 200, and the maintenance and test panel 500.

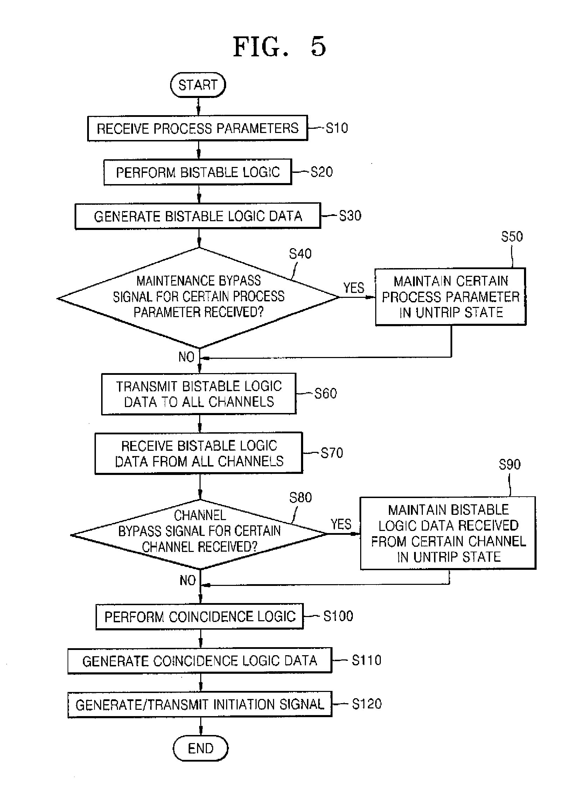

FIG. 5 is a flowchart illustrating a plant protection method, according to an embodiment of the present invention.

The plant protection method is performed in the plant protection system described above. The method is substantially identical to the functions of the system elements, and thus overlapping descriptions are omitted herein.

In step S10, a bistable logic unit of each channel receives assigned process parameters from field sensors.

In step S20, the bistable logic unit of each channel performs bistable logic comparing process parameters with their setpoints.

In step S30, the bistable logic unit generates bistable logic data indicating trip state of each process parameter.

When a maintenance bypass signal for a certain process parameter is received in step S40, the bistable logic unit of each channel maintains the trip state of the certain process parameter in the bistable logic data in an uptrip state as in step S50.

When the maintenance bypass signal is not received, the bistable logic unit of each channel transmits the bistable logic data to all of four channels (the same channel and the other three channels) as in step S60.

A coincidence logic unit of each channel collects all bistable logic data from the four channels as in step S70.

When a channel bypass signal for a channel is received as in step S80, the coincidence logic unit of each channel maintains the trip state of the bistable logic data from the channel in an untrip state as in step S90.

In step S100, the coincidence logic unit of each channel performs local coincidence logic on each process parameter with the bistable logic data, and thereby generating coincidence logic data related to plant protective actions as in step S110.

In step S120, an initiation circuit unit of each channel generates initiation signals for plant protective actions by performing initiation logic with the coincidence logic data, and transmits the initiation signals to the RTSS and ESFAS.

According to the present invention, initiation of plant protective actions is determined only by using the FPGA and hardware without CPU and software, and thus the common mode failure and cyber security vulnerability caused by using software are completely removed.

Also, all functions of a plant protection system are not lost due to a single disorder in a card, and thus high reliability is obtained without performing duplication in each channel.

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A plant protection system using field programmable gate array (FPGA), wherein the plant protection system detects non-permissible plant conditions with the result of comparing process parameters with their setpoints and controls a system that shuts down a plant or mitigates the consequences of abnormal conditions,
the plant protection system comprising four channels,
wherein each of the four channels comprises:
a bistable logic unit, which performs bistable logic comparing the process parameters with the their setpoints, generates bistable logic data containing trip state of the process parameters, and transmits the bistable logic data to the four channels;
a coincidence logic unit, which collects the bistable logic data from the four channels, performs local coincidence logic on each process parameter with the bistable logic data, and generates coincidence logic data related to plant protective actions; and
an initiation circuit unit, which performs initiation logic for the plant protective actions with the coincidence logic data and generates initiation signals for the plant protective actions.

2. The system of claim 1, wherein the bistable logic unit comprises:
a bistable logic card, which receives the process parameters from sensors, performs bistable logic in the FPGA and generates the bistable logic data;
a bistable logic interface card, which transmits the bistable logic data to the each coincidence logic unit of the four channels; and
a monitoring interface card, which monitors the integrity of the bistable logic card and the bistable logic interface card, and transmits monitoring results to a maintenance and test panel.

3. The system of claim 2, wherein the bistable logic interface card includes maintenance bypass logic which maintains trip state of a process parameter in untrip state when a maintenance bypass signal for the process parameter is received, wherein the maintenance bypass logic is implemented in FPGA.

4. The system of claim 3, wherein the bistable logic interface card comprises four independent cards which are connected in a one-to-one manner to the coincidence logic unit of an assigned channel among the four channels, and the each bistable logic interface card receives the bistable logic data from the bistable logic card and then transmits the bistable logic data to the coincidence logic unit of the assigned channel.

5. The system of claim 1, wherein the coincidence logic unit comprises:
a coincidence logic interface card, which collects the bistable logic data from the four channels;
a coincidence logic card, which performs the local coincidence logic in FPGA with the bistable logic data and generates the coincidence logic data; and
a monitoring interface card, which monitors the integrity of the coincidence logic card and the coincidence logic interface card, and transmits monitoring results to a maintenance and test panel.

6. The system of claim 5, wherein the coincidence logic card comprises channel bypass logic, which maintains the bistable logic data from a certain channel in untrip state when a channel bypass signal for the certain channel is received, wherein the channel bypass logic is implemented in FPGA.

7. The system of claim 6, wherein the coincidence logic interface card comprises four independent cards which are connected in a one-to-one manner to the bistable logic unit of an assigned channel among the four channels, and the each coincidence logic interface card receives the bistable logic data from the bistable logic unit of the assigned channel and then transmits the bistable logic data to the coincidence logic card.

8. The system of claim 7, wherein the coincidence logic card comprises four independent cards connected to all of the four coincidence logic interface cards, and each coincidence logic card collects the bistable logic data from the four coincidence logic interface cards, generates the coincidence logic data and then transmits the coincidence logic data to the initiation circuit unit.

9. A plant protection method using field programmable gate array (FPGA), wherein the method is performed in a plant protection system which includes four channel, detects non-permissible plant conditions with the result of comparing process parameters with their setpoints and controls a system that shuts down a plant or mitigates the consequences of abnormal conditions,
Wherein the method is performed identically in each channel,
the method comprising:
(a) receiving the process parameters from sensors;
(b) performing bistable logic comparing the process parameters with their setpoints, and generating bistable logic data containing trip status of each process parameter ;
(c) transmitting the bistable logic data to the same channel and the other three channels;
(d) collecting the bistable logic data from the same channel and the other three channels, and performing local coincidence logic of each process parameter with the bistable logic data, and generating coincidence logic data related to plant protective actions; and
(e) performing initiation logic for the plant protective actions with the coincidence logic data and generating initiation signals for the plant protective actions.

10. The method of claim 9, wherein (c) comprises maintaining trip state of a certain process parameter in untrip state, when a maintenance bypass signal for the certain process parameter is received.

11. The method of claim 9, wherein (d) comprises maintaining the bistable logic data from a certain channel in untrip state, when a channel bypass signal for the certain channel is received.
